**Europäisches Patentamt**

**European Patent Office**

**Office européen des brevets**

(19)

(11) Veröffentlichungsnummer: **0 416 239 A1**

# (12) EUROPÄISCHE PATENTANMELDUNG

(21) Anmeldenummer: 90113027.8

(22) Anmeldetag: 07.07.90

(51) Int. Cl.⁵: **B21D 53/84**, B23K 26/00, B23P 11/02, C21D 9/30

(30) Priorität: 02.09.89 DE 3929179

(43) Veröffentlichungstag der Anmeldung:
13.03.91 Patentblatt 91/11

(84) Benannte Vertragsstaaten:
CH DE ES FR GB IT LI SE

(71) Anmelder: **Balcke-Dürr AG**
Homberger Strasse 2 Postfach 1240
W-4030 Ratingen 1(DE)

(72) Erfinder: **Podhorsky, Miroslan, Dr.**
Elisabethstrasse 10a
W-4030 Ratingen 1(DE)

(74) Vertreter: **Patentanwälte Dipl.-Ing. Alex Stenger Dipl.-Ing. Wolfram Watzke Dipl.-Ing. Heinz J. Ring**
Kaiser-Friedrich-Ring 70
W-4000 Düsseldorf 11(DE)

(54) Verfahren zur Herstellung einer Nockenwelle oder eines entsprechenden Bauteils.

(57) Die Erfindung betrifft ein Verfahren zur Herstellung einer Nockenwelle oder eines entsprechenden Bauteils mit auf einem Kernrohr (1) im vorgegebenen Abstand voneinander und in vorbestimmter Stellung durch Aufweiten des Kernrohres (1) befestigten Teilen (2,3,4), wobei das Aufweiten durch das Einbringen einer Druckflüssigkeit in das Kernrohr (1) erfolgt. Um eine sichere Befestigung der Teile und eine hohe Widerstandsfähigkeit gegen Abnutzung zu erzielen, wird die einem mechanischen Verschleiß unterworfene Oberfläche der auf dem Kernrohr (1) befestigten, aus einem duktilen Sphäroguß oder Sinterwerkstoff hergestellten Teile (2,3) mittels eines gesteuerten Laserstrahls derart aufgeschmolzen, daß der Haftdruck ($H_1$) zwischen den Teilen (2,3) und dem Kernrohr (1) zuerst aufgrund der Aufschmelzung der Oberflächenschicht geringfügig abgebaut wird und anschließend nach der Erstarrung der umgeschmolzenen Schicht und aufgrund des Temperaturausgleichs in den Teilen (2,3) und dem Kernrohr (1) auf einen höheren Wert ($H_3$) steigt. Durch die Umschmelzung ergibt sich eine ledeburitische Struktur ausreichender Tiefe.

Fig.1

EP 0 416 239 A1

# VERFAHREN ZUR HERSTELLUNG EINER NOCKENWELLE ODER EINES ENTSPRECHENDEN BAUTEILS

Die Erfindung betrifft ein Verfahren zur Herstellung einer Nockenwelle oder eines entsprechenden Bauteils mit auf einem Kernrohr im vorgegebenen Abstand voneinander und in vorbestimmter Stellung durch Aufweiten des Kernrohres befestigten Teilen, wobei das Aufweiten durch das Einbringen einer Druckflüssigkeit in das Kernrohr erfolgt.

Ein derartiges Verfahren zur Herstellung von Nockenwellen ist bekannt. Es hat gegenüber den einstückig gegossenen Nockenwellen den Vorteil, daß einerseits für das Kernrohr und andererseits für die Nocken der jeweils geeignete Werkstoff ausgewählt werden kann. Bei der Verwendung von Nocken bzw. anderen, auf dem Kernrohr zu befestigenden Teilen aus Gußmaterial ergeben sich jedoch Schwierigkeiten bei der Befestigung, weil diese Gußteile nicht über einen für das bekannte Befestigungsverfahren erforderlichen elastischen Dehnungsweg verfügen.

Der Erfindung liegt die Aufgabe zugrunde, ein Verfahren zur Herstellung einer Nockenwelle oder eines entsprechenden Bauteils mit auf einem Kernrohr durch Aufweiten des Kernrohres durch Einbringen einer Druckflüssigkeit zu befestigenden Teilen zu schaffen, das eine zuverlässige Befestigung auch gegossener Bauteile ohne einen nennenswerten elastischen Dehnungsweg ermöglicht.

Die Lösung dieser Aufgabenstellung durch die Erfindung ist dadurch gekennzeichnet, daß die einem mechanischen Verschleiß unterworfene Oberfläche der auf dem Kernrohr befestigten, aus einem duktilen Sphäroguß oder Sinterwerkstoff hergestellten Teile mittels eines gesteuerten Laserstrahls derart aufgeschmolzen wird, daß der Haftdruck zwischen den Teilen und dem Kernrohr zuerst aufgrund der Aufschmelzung der Oberflächenschicht geringfügig abgebaut wird und anschließend nach der Erstarrung der umgeschmolzenen Schicht und aufgrund des Temperaturausgleichs in den Teilen und dem Kernrohr auf einen höheren Wert steigt. Gemäß einem weiteren Merkmal der Erfindung bildet sich eine ledeburitische Struktur mit ausreichender Tiefe, etwa 0,5 bis 1,0 mm.

Mit dem erfindungsgemäßen Verfahren wird der Vorteil erreicht, daß auch im Gießverfahren hergestellte Teile, insbesondere Nocken aus duktilem Sphäroguß oder Sinterwerkstoff zuverlässig auf einem Kernrohr befestigt werden können. Die Nocken werden zuerst in der richtigen Lage und Stellung auf dem hohlen Kernrohr angeordnet und anschließend durch Aufweiten des Kernrohres mittels in dieses eingebrachter Druckflüssigkeit aufgeweitet. Anschließend wird die Oberfläche der Nocken durch Grobschleifen bearbeitet. Danach wird die dem mechanischen Verschleiß unterworfene Oberfläche der Nocken mittels eines gesteuerten Laserstrahls aufgeschmolzen. Aufgrund dieser Aufschmelzung der Oberflächenschicht wird zuerst der durch das Aufweiten des Kernrohres zwischen den Nocken und dem Kernrohr aufgebaute Haftdruck geringfügig abgebaut. Nach der Erstarrung der umgeschmolzenen Schicht und aufgrund des Temperaturausgleichs zwischen den Nocken und dem Kernrohr steigt anschließend jedoch der Haftdruck zwischen den Nocken und dem Kernrohr auf einen höheren Wert, d.h. auf einen Wert, der den ursprünglichen, durch Aufweiten des Kernrohres erzeugten Haft druck übersteigt. Durch das Aufschmelzen hat sich in der Rohrfläche der Nocken mit einer Tiefe von 0,5 bis 1,0 mm eine ledeburitische Struktur gebildet, die besonders widerstandsfähig gegen Abnutzung ist. Die Oberfläche der Nocken wird abschließend durch Feinschleifen bearbeitet.

Auf der Zeichnung sind ein Ausführungsbeispiel einer nach dem erfindungsgemäßen Verfahren hergestellten Nockenwelle und ein Diagramm dargestellt, und zwar zeigen:

Fig. 1 eine Ansicht einer derartigen Nockenwelle,

Fig. 2 einen Querschnitt durch die Nockenwelle gemäß der Schnittlinie II-II in Fig. 1,

Fig. 3 einen vergrößert dargestellten Teilschnitt durch den in Fig. 2 gezeichneten Nocken und

Fig. 4 ein Diagramm, das den zeitlichen Verlauf des Haftdruckes zwischen den Nocken und dem Kernrohr beim erfindungsgemäßen Verfahren zeigt.

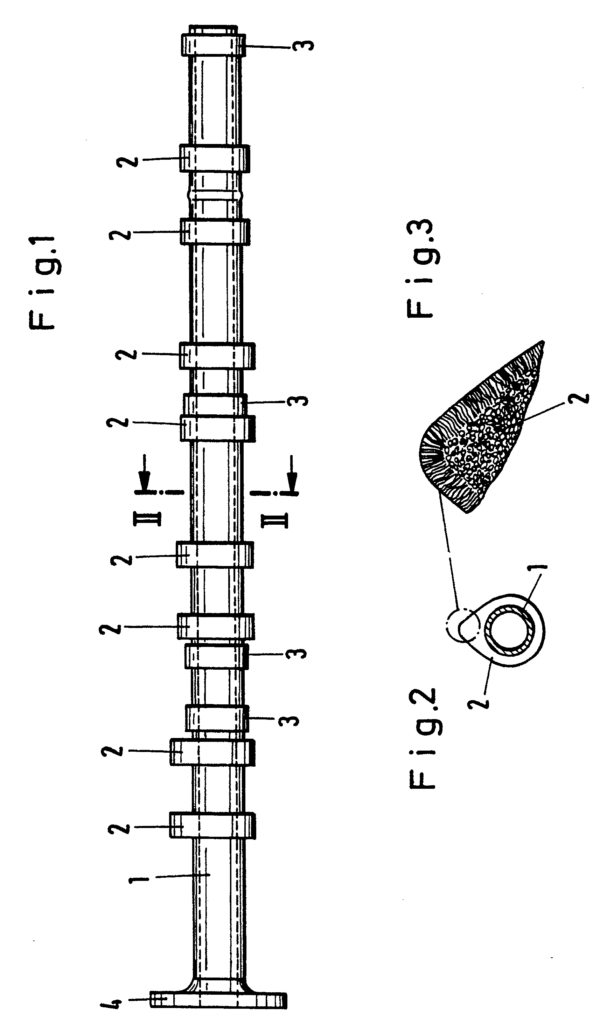

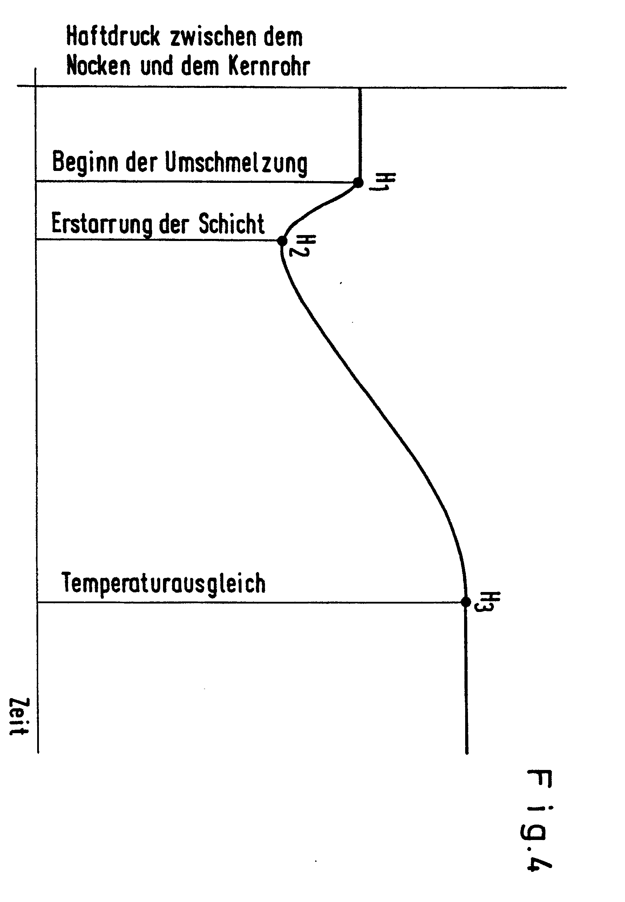

Die in Fig. 1 gezeigte Nockenwelle besteht aus einem Kernrohr 1, auf dem insgesamt acht Nocken 2, vier Lagerringe 3 und ein Stirnrad 4 befestigt sind. Diese Teile 2,3 und 4 werden in der jeweils vorgegebenen Lage auf dem Kernrohr 1 angeordnet, das anschließend durch Einbringen einer Hydraulikflüssigkeit unter hohem Druck aufgeweitet wird. Hierdurch ergibt sich ein Haftdruck $H_1$ zwischen jeder Hocke 2 bzw. Lagerring 3 und Stirnrad 4 einerseits und dem Kernrohr 1 andererseits, wie er in Fig. 4 eingezeichnet ist.

Nachdem die Nocken 2 und gegebenenfalls die Lagerringe 3 an ihrer Oberfläche durch Grobschleifen bearbeitet worden sind, erfolgt nunmehr ein Aufschmelzen der Oberfläche insbesondere der Nocken 2 mittels eines gesteuerten Laserstrahls. Aufgrund dieser Aufschmelzung der Oberflächenschicht wird zuerst der Haftdruck geringfügig auf den Wert $H_2$ abgebaut. Nach der Erstarrung der umgeschmolzenen Oberflächenschicht und dem sich ergebenden Temperaturausgleich zwischen Nocken 2 und Kernrohr 1 steigt der Haftdruck jedoch selbsttätig auf einen Wert H₃, der auf einem höheren Niveau liegt als der Haftdruck H₁, der sich nach dem hydraulischen Aufweiten des Kernrohres 1 ergab. Dieser Verlauf des Haftdruckes zwischen Nocken 2 und Kernrohr 1 ist in Abhängigkeit von der Zeit im Diagramm der Fig. 4 dargestellt.

Außer der Erhöhung des Haftdruckes zwischen Kernrohr 1 und Nocken 2 hat die Umschmelzung der Oberflächenschicht der Nocken 2 zur Folge, daß sich in der Oberfläche der Nocken 2 eine ledeburitische Struktur mit ausreichender Tiefe bildet, und zwar etwa mit 0,5 bis 1,0 mm. Diese ledeburitische Struktur ist besonders widerstandsfähig gegen Abnutzung. Sie ist in Fig. 3 angedeutet.

## Bezugsziffernliste

1 Kernrohr
2 Nocke
3 Lagerring
4 Stirnrad
H₁ Haftdruck nach hydraulischem Aufweiten
H₂ Haftdruck nach Aufschmelzen
H₃ Haftdruck nach Erstarren und Temperaturausgleich

## Ansprüche

1. Verfahren zur Herstellung einer Nockenwelle oder eines entsprechenden Bauteils mit auf einem Kernrohr im vorgegebenen Abstand voneinander und in vorbestimmter Stellung durch Aufweiten des Kernrohres befestigten Teilen, wobei das Aufweiten durch das Einbringen einer Druckflüssigkeit in das Kernrohr erfolgt,
**dadurch gekennzeichnet,**
daß die einem mechanischen Verschleiß unterworfene Oberfläche der auf dem Kernrohr (1) befestigten, aus einem duktilen Sphäroguß oder Sinterwerkstoff hergestellten Teile (2,3) mittels eines gesteuerten Laserstrahls derart aufgeschmolzen wird, daß der Haftdruck (H₁) zwischen den Teilen (2,3) und dem Kernrohr (1) zuerst aufgrund der Aufschmelzung der Oberflächenschicht geringfügig abgebaut wird und anschließend nach der Erstarrung der umgeschmolzenen Schicht und aufgrund des Temperaturausgleichs in den Teilen (2,3) und dem Kernrohr (1) auf einen höheren Wert (H₃) steigt.
2. Verfahren nach Anspruch 1, dadurch gekennzeichnet, daß durch die Aufschmelzung eine ledeburitische Struktur mit ausreichender Tiefe von etwa 0,5 bis 1,0 mm gebildet wird.

Fig.1

Fig.2          Fig.3

EP 0 416 239 A1

Fig.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-A-3626799 (TOYOTA JIDOSHA K.K.) <br> * Spalte 1, Zeilen 47 - 57; Figur 1 * <br> --- | 1 | B21D 53/84 <br> B23K 26/00 <br> B23P 11/02 <br> C21D 9/30 |
| Y | US-A-4449281 (T.YOSHIDA ET AL.) <br> * Ansprüche 1, 2; Figur 1 * <br> --- | 1 | |
| A | EP-A-0278292 (GESENKSCHMIEDE SCHNEIDER GMBH) <br> * Ansprüche 1, 4; Figur 1 * <br> --- | 1, 2 | |
| A | EP-A-0161624 (TOYOTA JIDOSHA K.K.) <br> * Seite 3, Zeilen 19 - 31 * <br> ----- | 1, 2 | |

**RECHERCHIERTE SACHGEBIETE (Int. Cl.5)**

B21D
B23K
B23P
C21D
F16D

Der vorliegende Recherchenbericht wurde für alle Patentansprüche erstellt

| Recherchenort | Abschlußdatum der Recherche | Prüfer |
|---|---|---|
| BERLIN | 04 DEZEMBER 1990 | WUNDERLICH J. |

EPO FORM 1503 03.82 (P0403)